(19)

Europäisches Patentamt
European Patent Office
Office européen des brevets

(11) **EP 3 851 838 A1**

(12) **DEMANDE DE BREVET EUROPEEN**

(43) Date de publication:
**21.07.2021 Bulletin 2021/29**

(51) Int Cl.:
***G01N 23/2273*** *(2018.01)*

(21) Numéro de dépôt: **21151681.0**

(22) Date de dépôt: **14.01.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **15.01.2020 FR 2000374**

(71) Demandeur: **Commissariat à l'énergie atomique et aux énergies alternatives**
**75015 Paris (FR)**

(72) Inventeurs:
- **CHANUEL, Antoine**
  **38054 Grenoble Cedex 09 (FR)**
- **MARTINEZ, Eugénie**
  **38054 Grenoble Cedex 09 (FR)**
- **VAUCHE, Laura**
  **38054 Grenoble Cedex 09 (FR)**
- **DE BRUCKER, Lola**
  **38000 Grenoble (FR)**

(74) Mandataire: **Brevalex**
**95, rue d'Amsterdam**
**75378 Paris Cedex 8 (FR)**

(54) **METHODE DE CARACTERISATION D'AU MOINS UNE INTERFACE GAN/DIELECTRIQUE PAR SPECTROSCOPIE DE PHOTOELECTRONS**

(57) Méthode de caractérisation d'une interface GaN/diélectrique comportant :
- la réalisation d'un élément comportant une couche de GaN recouverte d'une couche d'un matériau diélectrique,
- acquisition d'un spectre XPS de l'interface entre la couche de GaN et la couche de matériau diélectrique, ledit spectre comportant la raie Ga2p,
- traitement de ladite raie Ga2p pour calculer le taux d'oxydation du gallium et déterminer la position en énergie de la raie Ga2p,
- comparaison du couple taux d'oxydation / position en énergie du couple Ga2p avec d'autres couples taux d'oxydation / position en énergie du couple Ga2p pour d'autres éléments comportant une couche de GaN recouverte d'une couche d'un matériau diélectrique, la couche de GaN de chaque élément ayant subi au moins une étape de procédé de fabrication différente de celle des couches de GaN des autres éléments.

FIG.5

EP 3 851 838 A1

**Description**

**DOMAINE TECHNIQUE ET ÉTAT DE LA TECHNIQUE ANTÉRIEURE**

La présente invention se rapporte à une méthode de caractérisation d'au moins une interface GaN/diélectrique mettant en œuvre la spectroscopie de photoélectrons.

Les structures comportant une telle interface sont utilisées dans les composants à base de GaN utilisés dans les transistors, notamment en électronique de puissance, dans les diodes électroluminescentes, le domaine photovoltaïque, l'amplification de puissance dans le domaine des radiofréquences (RF).

On cherche à connaître l'interface GaN/diélectrique, par exemple l'$Al_2O_3$, car elle impacte directement les performances électriques du dispositif, notamment on cherche à connaître davantage l'effet de la présence d'oxyde de gallium à l'interface GaN/diélectrique.

Une technique pour caractériser l'interface GaN/oxyde est la spectroscopie de photoélectrons ou XPS (X-ray photoelectron spectroscopy en terminologie anglo-saxonne). Cette technique permet d'évaluer le taux d'oxydation du gallium en effectuant une analyse détaillée du spectre de la raie Ga3d. Cette technique est par exemple décrite dans le document Kim et al., Band-bending of Ga-Polar GaN interfaced with Al203 through Ultraviolet/Ozone treatment, ACS Applied Materials & Interfaces, 9, 17576 (2017).

La décomposition de la raie Ga3d permet d'extraire les contributions associées au GaN (Ga-N) et à l'oxyde de Ga (Ga-O). Le rapport de ces deux contributions permet d'évaluer le taux d'oxydation du GaN.

Par ailleurs, la caractérisation de l'interface GaN/oxyde par spectroscopie de photoélectrons permet aussi de détecter la présence de charges ou de dipôles à l'interface GaN /oxyde, qui est corrélée à des variations de l'environnement chimique. Ces charges induisent une variation de la courbure de bande du GaN à l'interface avec l'oxyde.

Cette variation de courbure est mesurée par rapport au niveau de Fermi du substrat, en l'occurrence du GaN. Il résulte de cette variation de courbure de bande du GaN, un décalage en énergie des raies XPS, notamment la raie Ga3d. Le suivi du déplacement ou décalage de cette raie permet de renseigner sur la présence de charges à l'interface GaN/oxyde. Une telle caractérisation est par exemple décrite dans le document Duan et al., Effect of PDA on the Interface Electronic Structures of Al203-Capped GaN and GaN-AlGaN-GaN Heterostructure, ECS Journal of Solid State Science and Technology, 4 (9),(2015).

La fabrication des composants à base de GaN met en œuvre des procédés de fabrication de la microélectronique utilisant notamment des étapes de photolithographie, des étapes de gravure ou traitement de surface par chimie humide ou plasma, des étapes de dépôt de diélectrique ou métal, des traitements thermiques. Afin d'optimiser ces procédés, il est souhaitable de pouvoir connaître l'effet des différentes étapes de fabrication sur l'interface GaN/diélectrique, dont la qualité impacte directement les propriétés électriques des transistors.

**EXPOSE DE L'INVENTION**

C'est par conséquent le but de la présente invention d'offrir une méthode de caractérisation d'une interface GaN/diélectrique mettant en œuvre la spectroscopie de photoélectrons permettant d'avoir des informations sur la qualité de cette interface GaN/diélectrique.

Le but énoncé ci-dessus est atteint par une méthode de caractérisation d'un empilement comportant une interface GaN/diélectrique, ladite méthode comportant une mesure par XPS de l'interface GaN/diélectrique, le traitement du pic Ga3d et/ou du pic Ga2p pour calculer le taux d'oxydation du Gallium et en extraire la position en énergie du pic Ga3d et/ou du pic Ga2p qui varie selon la courbure de bande du GaN, et la mise en relation du taux d'oxydation et de la position du pic. Ensuite une comparaison peut être effectuée en utilisant un abaque rassemblant des couples taux d'oxydation/ position en énergie du pic Ga3d et/ou Ga2p pour différents échantillons présentant une interface GaN/diélectrique différente, chaque échantillon ayant subi des étapes de fabrication différentes.

Cette mise en relation du taux d'oxyde de gallium et de la position du pic Ga3d et/ou Ga2p permet d'évaluer relativement simplement la qualité de l'interface, impactant les propriétés électriques, ce qui permet par exemple d'optimiser les procédés de fabrication des composants électroniques, par exemple les transistors.

En effet, les inventeurs ont déterminé que le taux d'oxydation et le décalage en énergie du pic Ga3d et/ou Ga2p, qui correspond à la quantité de charges présentes à l'interface, présentaient une certaine corrélation et que le couple taux d'oxydation et décalage en énergie du pic Ga3d et/ou Ga2p était représentatif des propriétés de l'interface GaN/diélectrique, notamment des propriétés électriques. Les inventeurs ont déterminé que l'utilisation du couple taux d'oxydation / décalage en énergie du pic Ga3d et/ou Ga2p permettait une comparaison relativement aisée des différents échantillons entre eux, et donc de déterminer par exemple quel procédé permettait d'obtenir les meilleurs propriétés électriques.

L'invention permet de caractériser la qualité de l'interface GaN/diélectrique qui est corrélée notamment à une ou plusieurs propriétés électriques, par exemple la tension de seuil des composants réalisés selon les mêmes procédés.

L'abaque peut être réalisé en effectuant des mesures par spectroscopie XPS sur plusieurs échantillons comportant une interface GaN/diélectrique réalisés par différents procédés de la microélectronique susceptibles d'être utilisés pour fabriquer les composants de manière industrielle, en déterminant les couples taux d'oxydation/position du pic Ga3d et/ou Ga2p pour les différents échantillons et en plaçant ceux-ci sur un graphique ayant en abscisse la position du pic Ga3d et en ordonnée le taux d'oxydation, et/ou un graphique ayant en abscisse la position du pic Ga2p et en ordonnée le taux d'oxydation.

Il est donc possible de caractériser qualitativement l'interface GaN/oxyde, relativement à un échantillon de référence en déterminant « son couple » taux d'oxydation/position du pic.

Jusqu'à présent, il n'avait pas été déterminé qu'il existait une dépendance entre ces deux informations et que la mise en relation de ces deux informations fournissait des indications sur les propriétés électriques.

Dans un autre exemple, on peut effectuer la comparaison avec des échantillons présentant des isolants électriques ou diélectriques différents, tels que le $SiN_x$, $SiO_2$, $HfO_2$. Ainsi il est possible d'évaluer le type d'oxyde le plus adapté pour former le diélectrique permettant d'obtenir une interface optimisée, par exemple l'interface qui pourrait alors être utilisée pour une intégration dans les transistors de puissance.

L'invention permet une comparaison entre des éléments ayant une couche en matériau diélectrique, qui diffèrent du matériau diélectrique des autres éléments.

On entend par « matériau diélectrique différent » une couche en matériau diélectrique dont la composition, et/ou l'épaisseur, et/ou l'état de surface et/ou le procédé de dépôt... sont différents d'un élément à l'autre.

La présente demande a alors pour objet une méthode de caractérisation d'une interface GaN/diélectrique donnée comportant :

- la réalisation d'un élément comportant une couche de GaN recouverte d'une couche d'un matériau diélectrique, la couche de GaN ayant subi au moins une étape de procédé de fabrication,
- acquisition d'un spectre XPS de l'interface entre la couche de GaN et la couche de matériau diélectrique, ledit spectre comportant au moins la raie Ga3d et/ou la raie Ga2p,
- traitement de ladite raie Ga3d et/ou de la raie Ga2p pour calculer le taux d'oxydation du gallium et déterminer la position en énergie de la raie Ga3d et/ou de la raie Ga2p,
- comparaison du couple taux d'oxydation / position en énergie de la raie Ga3d et/ou de la raie Ga2p, avec d'autres couples taux d'oxydation / position en énergie de la raie Ga3d et/ou de la raie Ga2p pour d'autres éléments comportant une couche de GaN recouverte d'une couche d'un matériau diélectrique, la couche de GaN de chaque élément ayant subi au moins une étape de procédé de fabrication différente de celles des couches de GaN des autres éléments, et/ou pour d'autres éléments comportant une couche de GaN recouverte d'une couche d'un matériau diélectrique, le matériau diélectrique étant différent d'un élément à l'autre.

Le spectre comporte également la raie C1s et l'étape de traitement peut comporter :

- une étape de déconvolution de la raie Ga3d de sorte à le décomposer en une composante Ga3d5/2, une composante Ga3d3/2 et une composante relative à l'oxyde de gallium, et/ou une étape de déconvolution de la raie Ga2p de sorte à le décomposer en une composante Ga2p3/2 et une composante relative à l'oxyde de gallium,
- une étape de recalage de la position en énergie du pic Ga3d et/ou de la raie Ga2p en utilisant la raie C1s.

De préférence, la position en énergie de la raie Ga3d est la position en énergie de la composante Ga3d5/2.

De manière avantageuse, la comparaison comporte la disposition du point relatif à l'élément à caractériser et des points relatifs aux autres éléments sur un graphique comportant en abscisse la position en énergie et en ordonnée le taux d'oxydation.

De préférence, le graphique forme un abaque réalisé préalablement.

La méthode de caractérisation peut comporter :

- l'acquisition d'un spectre comportant au moins la raie N1s
- le traitement de ladite raie N1s pour calculer le taux d'oxydation du GaN et déterminer la position en énergie de la raie N1s,
- comparaison du couple taux d'oxydation / position en énergie du couple N1s avec d'autres couples taux d'oxydation / position en énergie du couple N1s pour d'autres éléments comportant une couche de GaN recouverte d'une couche d'un matériau diélectrique, la couche de GaN de chaque élément ayant subi au moins une étape de fabrication différente de celles des couches de GaN des autres éléments, et/ou pour d'autres éléments comportant une couche de GaN recouverte d'une couche d'un matériau diélectrique, le matériau diélectrique étant différent d'un élément à l'autre.

La présente invention a également pour objet une méthode de caractérisation d'un transistor à grille métal-isolant ou diélectrique-semi-conducteur, comportant une interface GaN/diélectrique donnée, comportant :

- la réalisation d'un élément comportant une couche de GaN recouverte d'une couche d'un matériau diélectrique, la couche de GaN ayant subi au moins une étape de procédé de fabrication, de sorte à présenter l'interface GaN/diélectrique donnée,
- acquisition d'un spectre XPS de l'interface donnée, avantageusement dans une boite de mesure de taille adaptée, par exemple 200 x 200 $\mu m^2$, ledit spectre comportant au moins la raie Ga3d et/ou la raie Ga2p,
- traitement de ladite raie Ga3d et/ou de la raie Ga2p pour calculer le taux d'oxydation du gallium et déterminer la position en énergie de la raie Ga3d et/ou de la raie Ga2p,
- la mesure de la tension de seuil du transistor à grille réalisé par la suite à partir du même élément présentant l'interface GaN/diélectrique donnée dans un motif de taille adapté, par exemple 1$\mu m$; les étapes de réalisation comprenant notamment le dépôt du métal de grille,
- comparaison du triplet taux d'oxydation / position en énergie de la raie Ga3d et/ou de la raie Ga2p /tension de seuil avec d'autres triplets taux d'oxydation /position en énergie de la raie Ga3d et/ou de la raie Ga2p /tension de seuil d'autres transistors à grille intégrant une couche GaN recouverte d'une couche d'un matériau diélectrique, la couche de GaN du transistor ayant subi une étape de procédé de fabrication différente de celles des couches de GaN des autres transistors à grille, et/ou pour une couche de GaN recouverte d'une couche d'un matériau diélectrique, le matériau diélectrique étant différent d'un transistor à l'autre.

La présente invention a également pour objet une méthode de sélection d'un procédé de fabrication d'une structure comportant une interface GaN/diélectrique destinée à une fonction donnée, comportant :

- la fabrication d'un ou plusieurs échantillons, lesdits échantillons ayant été fabriqués par des procédés de fabrication qui diffèrent les uns des autres par au moins une étape de fabrication,
- application de la méthode de caractérisation selon l'une des l'invention
- sélection de l'échantillon dont l'interface présente les propriétés les plus adaptées à la fonction donnée parmi les différents échantillons.

La présente invention a également pour objet une méthode de sélection d'un matériau diélectrique pour une interface GaN/diélectrique destinée à une fonction donnée, comportant :

- la fabrication d'échantillons différant les uns des autres par le matériau diélectrique de l'interface GaN/diélectrique,
- application de la méthode de caractérisation selon l'invention,
- sélection de l'échantillon dont l'interface présente les propriétés les plus adaptées à la fonction donnée parmi les différents échantillons.

La présente invention a également pour objet une méthode de contrôle de la qualité de fabrication d'une structure comportant une interface GaN/diélectrique dans une ligne de production comportant :

- fabrication d'une structure sur la ligne de production ;
- application de la méthode de caractérisation selon l'invention,
- détermination de la qualité de la fabrication.

La présente invention a également pour objet une méthode de contrôle de la qualité de fabrication d'un transistor comportant une interface GaN/diélectrique dans une ligne de production comportant :

- fabrication d'une structure destinée à subir une mesure XPS et d'un transistor sur la ligne de production,
- application de la méthode de caractérisation selon l'invention,
- détermination de la qualité de la fabrication.

**BREVE DESCRIPTION DES DESSINS**

La présente invention sera mieux comprise sur la base de la description qui va suivre et des dessins en annexe sur lesquels :

La figure 1 est une vue en coupe d'un exemple de structure caractérisée par le procédé selon l'invention.
La figure 2 est une représentation schématique d'un équipement d'analyse XPS.

La figure 3 est une représentation de la raie Ga3d obtenue par XPS et sa décomposition.

La figure 4 est une représentation graphique regroupant les points obtenus par XPS exploitant la raie Ga3d et permettant de caractériser les interfaces les unes par rapport aux autres.

La figure 5 est une représentation de la raie Ga2p obtenue par XPS et sa décomposition.

La figure 6 est une représentation graphique regroupant les points obtenus par XPS exploitant la raie Ga2p et permettant de caractériser les interfaces les unes par rapport aux autres.

La figure 7 est une représentation du taux d'oxydation en fonction de l'épaisseur d'$Al_2O_3$ en nm.

## EXPOSÉ DÉTAILLÉ DE MODES DE RÉALISATION PARTICULIERS

Les termes «pic » et « raie » sont synonymes dans la présente demande.

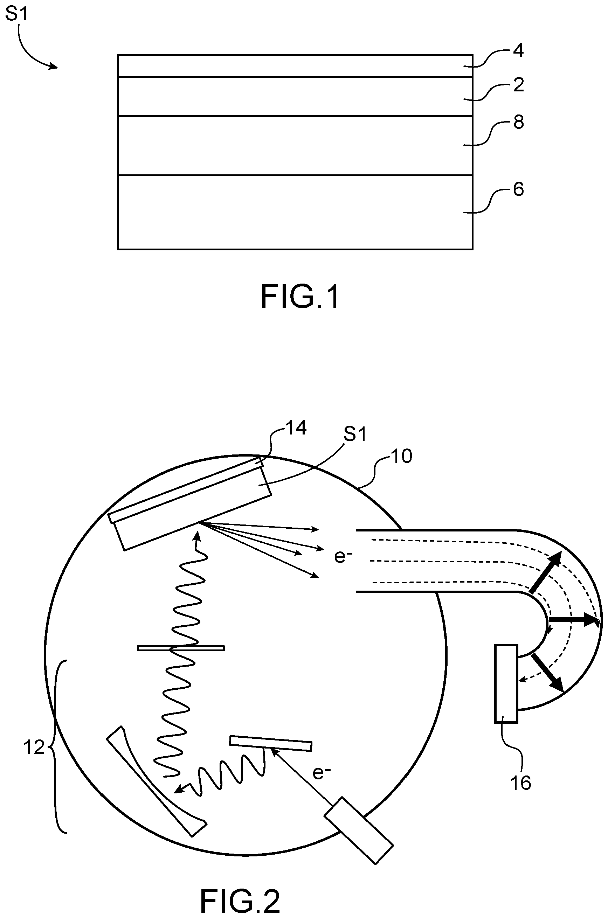

Sur la figure 1, on peut voir une représentation schématique d'un exemple de structure que l'on souhaite caractériser avec le procédé de caractérisation selon l'invention.

La structure S1 comporte au moins une couche de GaN 2 recouverte d'une couche de $Al_2O_3$ 4. On souhaite caractériser l'interface GaN/ $Al_2O_3$.

La structure comporte également un substrat 6 et une couche tampon 8 permettant la réalisation de la couche de GaN 2 cristalline. Le substrat est par exemple en Si, Saphir, SiC.

De manière générale, on souhaite caractériser l'interface GaN/diélectrique, le diélectrique pouvant être choisi parmi $Al_2O_3$, AlN, SiNx, $SiO_2$, $HfO_2$.

En variante, le structure peut comporter un substrat directement en GaN, réalisé par exemple par croissance ammonothermale ou Ammono-thermal growth en terminologie anglo-saxonne. On caractérise alors l'interface substrat GaN/diélectrique.

Dans l'exemple qui va être décrit, on considère la caractérisation de l'effet du traitement de surface par chimie humide du GaN avant le dépôt de la couche de $Al_2O_3$ sur l'interface GaN/ $Al_2O_3$ et d'une gravure de la couche de GaN et du retrait de la résine (stripping) ayant servie pour la gravure.

Lors d'une première étape, la structure est réalisée par les techniques de la microélectronique.

La couche de GaN est formée sur un empilement composé d'un substrat 6 et d'une couche tampon 8 selon les procédés d'épitaxie tels que le dépôt chimique en phase vapeur assisté par organo-métallique (ou Metalorganic Chemical Vapor Deposition en terminologie anglo-saxonne connu sous l'acronyme MOCVD) ou l'épitaxie par jets moléculaires (ou Molecular Beam Epitaxy en terminologie anglo-saxonne connu sous l'acronyme MBE) ou par épitaxie HVPE (Hybrid Vapor Phase Epitaxy en terminologie anglo-saxonne). Éventuellement une étape de gravure, par exemple : gravure ionique réactive assistée par plasma (ou Inductive Coupled Plasma - Reactive Ion Etching en terminologie anglo-saxonne connu sous l'acronyme ICP-RIE), et également une étape de décapage de résine photosensible et nettoyage de surface, également appelée étape de stripping. Une étape de nettoyage a lieu, par exemple par chimie humide HF. Puis une couche de $Al_2O_3$ est formée selon un procédé de dépôt de microélectronique, par exemple dépôt de couches atomique (ou Atomic Layer Deposition en en terminologie anglo-saxonne connu sous l'acronyme ALD).

L'interface est à une profondeur de l'ordre de 2 nm afin d'être atteignable par l'analyse XPS, en effet la profondeur sondée est généralement de l'ordre de 5 nm. Pour cela, soit la couche 4 déposée est très fine, soit la couche 4 de diélectrique est amincie.

Lors d'une étape suivante on effectue une analyse par spectroscopie de photoélectrons (XPS) de l'interface.

Sur la figure 2, on peut voir une représentation schématique d'un exemple d'un équipement de XPS.

Il comporte une enceinte sous vide 10, par exemple à une pression de $10^{-10}$ Torr ($1,333 \times 10^{-9}$ mbar), une source de rayons X 12, un porte-échantillon 14 disposé dans l'enceinte 10 et un détecteur des photoélectrons 16 arrachés par les rayons X. La source de rayons X peut être une source monochromatique à base d'aluminium et le détecteur de photoélectrons peut être un analyseur hémisphérique associé à un ou plusieurs channeltrons.

La structure est placée sur le porte-échantillon et une analyse XPS a lieu.

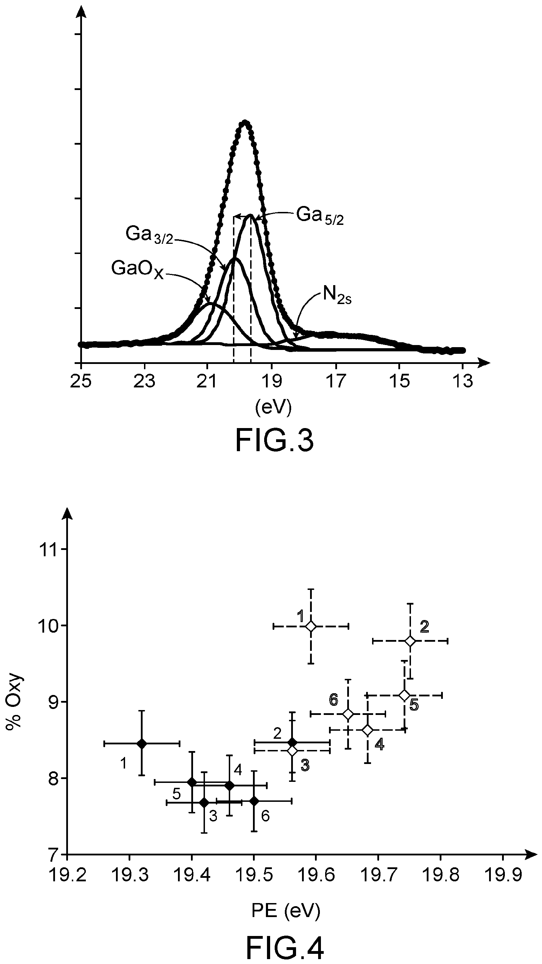

On acquiert un spectre XPS tel que représenté en pointillés sur la figure 3.

Dans un exemple de procédé de caractérisation, on s'intéresse plus particulièrement au moins au pic Ga3d et au pic C1s.

L'acquisition se fait sur la gamme spectrale autour de 20 eV, par exemple sur la gamme [10eV ; 30eV], pour le pic Ga3d et autour de 285 eV, par exemple sur la gamme [275eV ; 295eV], pour le pic C1s. La résolution en énergie de la mesure est choisie suffisante pour procéder à une analyse détaillée de la raie Ga3d, par exemple elle est inférieure à 0,6 eV. Les gammes d'énergie énoncées ci-dessus ne sont pas fixes. Les gammes en énergie sont choisies pour que les pics soient observables en entier.

L'énergie de passage et le temps d'intégration, fixés lors de l'acquisition, sont choisis afin d'obtenir des spectres peu ou pas bruités.

Un système de compensation de charges, par exemple de type Flood Gun, est utilisé pendant les mesures pour assurer la reproductibilité du positionnement en énergie des raies XPS, en évitant des effets de charges induits sous irradiation X. Ce type de système est bien connu de l'homme du métier et sa mise en œuvre est par exemple décrite dans le document Cazaux, J. Electron Spectrosc. Relat. Phenom. 113, 15 (2000). Une telle compensation appliquée pour les mesures XPS sur les différents échantillons assure une reproductibilité de la position en énergie des pics XPS.

On effectue ensuite un recalage de la position en énergie des pics, dont la position a été modifiée du fait de la compensation.

Pour cela, on utilise par exemple le pic C1s qui sert de référence commune à tous les échantillons et permet d'effectuer une comparaison pertinente.

On effectue un ajustement ou fit du pic C1s. Ce fit est de forme gaussienne et est tel qu'il se rapproche de la courbe obtenue par XPS. De manière avantageuse, les paramètres de la gaussienne, tels que la position, la largeur à mi-hauteur, l'intensité, sont optimisés par un algorithme, par exemple utilisant la méthode des moindres carrés, afin d'obtenir un fit proche de la courbe expérimentale. Cet ajustement permet d'obtenir une valeur précise de la position en énergie du pic C1s, qui est celle de la valeur maximale de la gaussienne.

La position du pic C1s est ensuite utilisée pour recaler le pic Ga3d. Pour cela, on choisit une valeur de référence, par exemple 284,8eV et on calcule le décalage entre cette valeur de référence et la position en énergie du pic C1s. On décale le pic C1s de sorte qu'il soit à la position de référence. Ce décalage est également appliqué ensuite aux pic Ga3d. La valeur de référence 284,8eV est communément utilisée. Une autre valeur de référence pourrait être choisie.

A titre d'exemple, après acquisition la position du fit du pic C1s se trouve à 283,5eV. Les pics C1s et Ga3d sont alors décalés de +1,3eV pour que C1s soit à la valeur de référence, choisie à 284,8eV.

Lors d'une étape suivante, le pic Ga3d est traité.

Le signal obtenu par XPS est caractéristique de la nature des atomes dont sont issus les photoélectrons et des liaisons chimiques engagées par ces atomes.

Le signal du pic Ga3d est la somme de plusieurs contributions. En effet, l'énergie des photoélectrons détectés dépend du type d'atome détecté et de son environnement chimique. Le signal du pic Ga3d est principalement la somme de signaux relatifs aux liaisons gallium avec l'azote Ga-N et gallium avec l'oxygène Ga-O.

L'étape suivante est une étape de déconvolution du spectre obtenu par XPS pour distinguer ces différentes contributions.

On effectue par exemple une décomposition de la raie Ga3d en utilisant des fonctions Voigt après soustraction d'un bruit de fond de type Shirley.

On observe également des pics N2s et O2s présents respectivement à basse et à haute énergies. Leurs intensités sont faibles et ils sont assez fortement décalés en énergie par rapport au pic Ga3d, leur influence est alors faible.

La principale composante du signal provient des électrons arrachés à des atomes de gallium liés avec des atomes d'azote. D'après les règles de transitions électroniques, deux transitions sont possibles pour les électrons de la couche 3d. On observe donc deux composantes notées Ga3d5/2 et Ga3d3/2 représentatives des liaisons Ga-N, et une composante représentative des électrons provenant d'atomes de gallium liés avec un atome d'oxygène (Ga-O). Afin de simplifier la déconvolution du pic Ga3d, les deux transitions Ga3d5/2 et Ga3d3/2 sont regroupées en une seule composante, en ce qui concerne le signal associé aux liaisons Ga-O.

Sur la figure 3, la raie Ga3d5/2 se situe vers 19,5 eV, et la raie Ga3d3/2 se situe vers 19,9 eV.

Les paramètres de la déconvolution sont les suivants :

Par exemple, la position des pics Ga3d5/2n et N2s sont laissés libres seules leurs positions relatives sont fixées de sorte que :

$$O2s > Ga3d5/2 > N2s$$

et la position du pic Ga3d3/2 et du pic GaO$_x$ sont fixées par rapport au pic Ga3d5/2.

Dans le tableau ci-dessous, on peut voir un exemple de paramètres choisis pour la déconvolution du pic Ga3d.

|  | Ga$_{5/2}$ | Ga$_{3/2}$ | Ga$_{-o}$ | N$_{2s}$ | O$_{2s}$ |
|---|---|---|---|---|---|
| **FWHM (eV)** | 1 | 1 | 1 | 2,4 | 2,4 |
| **% Gauss** | 90 | 90 | 90 | 100 | 100 |
| **Aire** | référence | 0,66 | - | - | - |
| **Décalage (eV)** | référence | 0,45 | 1,2 | - | - |

FWHM correspond la largeur à mi-hauteur des gaussiennes (Full with at half maximum).

%Gauss est le poids donné à la fonction Gaussienne dans les fonctions de Voigt.

L'aire des contributions (pics) du Ga3d5/2 et du GaO$_x$ ne sont pas fixées mais évaluée lors de la déconvolution pour reproduire au mieux les données expérimentales. En revanche l'aire du pic Ga3d3/2 est fixée à 0,66 x aire pic Ga3d5/2, qui résulte des taux d'occupation de ces deux niveaux de cœur par les électrons.

Le décalage correspond à la position des pics Ga3d3/2 et du pic GaO$_x$ par rapport au pic Ga3d5/2.

Avantageusement les paramètres de la déconvolution sont optimisés en utilisant un échantillon de GaN, sans couche d'oxyde 4.

A la fin de l'étape de décomposition, on obtient les pics représentés sur la figure 3.

Lors d'une étape suivante, on détermine le taux d'oxydation de la surface du GaN qui est égal à :

$$taux\ d'oxydation = \frac{Aire\ pic\ GaO}{Aire\ pic\ GaO + Aire\ pic\ Ga3d5/2 + Airepic\ Ga3d3/2}$$

Par exemple, on décompose chaque courbe à l'aide d'un logiciel de traitements des données XPS, tel que Casa XPS® ou Multipak®.

Lors d'une étape suivante, on extrait la position en énergie du pic Ga3d à partir de la déconvolution. On assimile de préférence cette position à la position de la raie Ga3d5/2 car il s'agit de la contribution la plus intense.

Lors d'une étape suivante, on effectue une comparaison entre le couple (position en énergie du pic Ga3d, taux d'oxydation) pour l'échantillon et les couples (position en énergie du pic Ga3d- taux d'oxydation) d'autres échantillons qui diffèrent les uns des autres par au moins une étape du procédé de fabrication correspondant.

De manière avantageuse, la comparaison est effectuée en plaçant les points dont les couples sont les coordonnées sur un graphique avec, en abscisse, la position en énergie du pic Ga3d PE et, en ordonnée, le taux d'oxydation %Oxy.

Les emplacements des points correspondant à différents échantillons les uns par rapport aux autres permettent une étude comparative de l'interface GaN/diélectrique des différents échantillons.

Sur la figure 4, on peut voir plusieurs points correspondant à la structure S1 et ayant subi différents nettoyages du GaN avant le dépôt de la couche de Al$_2$O$_3$. En outre, pour un groupe d'échantillon (trait plein), le GaN n'a pas subi de gravure, et pour l'autre groupe (en trait interrompu), le GaN a subi une gravure. Les échantillons ayant subi la gravure ont également subi un stripping, i.e. un retrait de la résine.

Les points 1 correspondent à des échantillons n'ayant pas subi de nettoyage.

Les points 2 à 6 correspondent à des échantillons ayant subi un nettoyage, les nettoyages étant différents entre les différents échantillons.

Les nettoyages sont par exemple réalisés à base de chimie humide utilisant par exemple le HF, le NH$_4$OH, le HCl, pris seuls ou en combinaison.

On compare ensuite les différents échantillons entre eux pour déterminer lequel ou lesquels sont les plus aptes à remplir la fonction que l'on souhaite réaliser.

Dans le cas où l'on souhaite réaliser un composant électronique présentant de bonnes propriétés électriques, les échantillons présentent les plus basses énergies et les taux d'oxydation les plus bas sont ceux qui sont le plus aptes à être utilisés pour réaliser des composants électroniques, car ce sont eux qui possèdent le moins de défauts donneurs dus à l'oxydation du GaN.

En plaçant le point (position en énergie, taux d'oxydation) déterminé pour l'interface de la structure S1 sur le graphique comportant les autres points, qui forme un abaque,et en comparant la position de ce point à celles des autres points, il est possible d'évaluer l'impact d'un nouveau traitement ou procédé de fabrication du GaN, d'optimiser le traitement ou procédé pour réaliser des composants électroniques de bonne qualité.

La détermination des coordonnées des points des différents échantillons comporte la déconvolution du pic Ga3d. Les paramètres bloqués, i.e. non optimisés par l'algorithme, lors de la déconvolution sont de préférence le mêmes pour tous les échantillons et identiques aux valeurs indiquées dans le tableau ci-dessus, sauf la largeur à mi-hauteur (FWHM) qui peut être modifiée selon les échantillons.

Dans le cas particulier du graphique de la figure 4, on constate une dégradation de l'interface GaN/oxyde après les procédés de gravure, stripping et nettoyage en lien avec la création de défauts chargés à cette interface. On remarque aussi une amélioration de la qualité de cette interface après nettoyage chimique pour les deux types de structures, c'està-dire avec ou sans gravure (points 2 à 6 par comparaison avec les points 1). En effet ces traitements permettent de retirer la couche endommagée contenant des charges en surface du GaN, avec plus ou moins d'efficacité. Le traitement 3 semble le plus performant.

Les inventeurs ont pensé à caractériser chaque échantillon par le couple : le taux d'oxydation du gallium et la position en énergie des raies du GaN, ce qui permet une comparaison simplifiée et rapide des échantillons entre eux et permet de caractériser la qualité de leur interface GaN/oxyde.

Afin d'évaluer l'échantillon, et plus précisément ses étapes de fabrication en vue de fabriquer un composant électronique, la méthode de caractérisation comporte donc:

- une mesure par XPS,
- la décomposition de la raie Ga 3d pour extraire le taux d'oxydation du Ga,
- la détermination de la position en énergie de la raie Ga3d après recalage sur la raie C1s à 284,8 eV,
- comparaison du point (taux d'oxydation/position en énergie) avec un abaque de points caractéristiques d'autres échantillons.

La méthode de caractérisation peut être utilisée en phase de développement pour choisir les étapes de fabrication et/ou les techniques et/ou les produits utilisés pour fabriquer le composant le plus performant.

La méthode de caractérisation peut également être utilisée comme méthode de vérification lors de la fabrication des composants, notamment des transistors à grille métal-isolant ou diélectrique-semi-conducteur. Par exemple, un équipement XPS peut être installé sur une ligne de production avec des moyens pour mettre en œuvre le procédé de caractérisation selon l'invention permettant une caractérisation rapide de la qualité de l'interface entre plusieurs échantillons, afin de vérifier, d'une part, que les composants obtenus sont conformes aux attentes et, d'autre part, que la reproductibilité du procédé de fabrication de composants en microélectronique est assurée. Par exemple, la mesure XPS est réalisée dans une boîte de mesure de taille adaptée, par exemple 200 x 200 $\mu m^2$.

Comme cela a été mentionné ci-dessus, la méthode de caractérisation selon l'invention permet de caractériser toute interface GaN/diélectrique, d'autres diélectriques pouvant être du AlN, SiNx, SiO$_2$, HfO$_2$.

La méthode de caractérisation décrite ci-dessus utilise la comparaison d'échantillons ayant subi des opérations de fabrication différentes. Elle peut alternativement ou en complément utiliser la comparaison entre différentes interfaces GaN/diélectrique, le matériau diélectrique variant. Ainsi elle permet d'évaluer quel type d'oxyde permet d'obtenir une interface optimisée, qui serait donc à privilégier pour une intégration dans les transistors de puissance.

Dans un autre exemple, le procédé de caractérisation exploite la raie Ga2p du Gallium ou la raie Ga2p du Gallium et la raie Ga3d. Pour cela on peut utiliser un équipement XPS muni d'une source X à haute énergie, tel que le Quantes®, doté d'une source X avec une anode en Chrome (raie Cr K$\alpha$ à 5415 eV). En outre l'utilisation de cette source permet d'augmenter l'épaisseur sondée, et ainsi passer de 10 nm à au moins 20 nm de profondeur, voire à 30 nm de profondeur.

Pour la raie Ga3d on peut utiliser une source X Al K$\alpha$ à 1487 eV.

Dans la présente demande, la raire Ga2p désigne soit la raie Ga2p3/2, soit la raie Ga2p1/2.

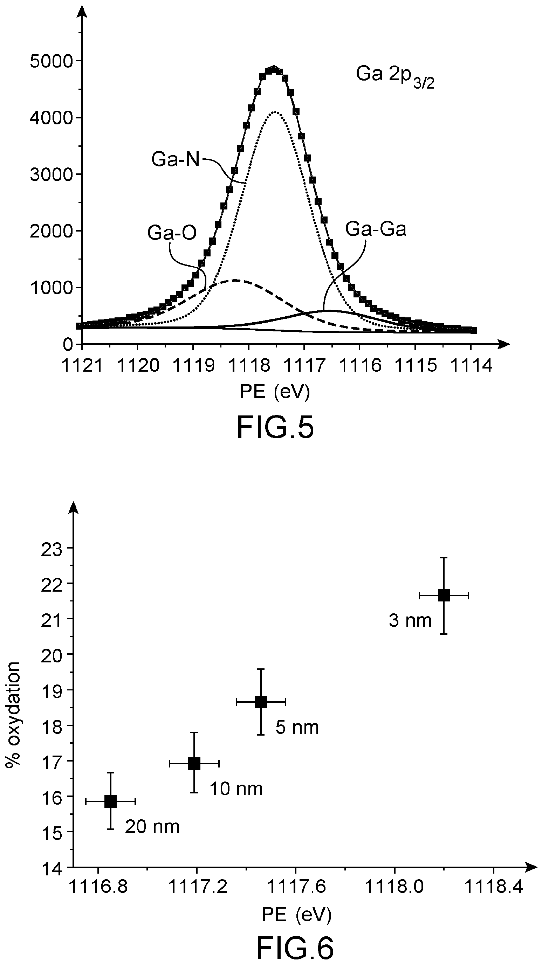

Pour la raire Ga2p, on réalise une déconvolution de sorte à la décomposer en une composante Ga2p relative au nitrure de gallium (Ga-N), une composante Ga2p relative à l'oxyde de gallium (Ga-O), et une composante relative à la présence de liaisons Ga-Ga comme cela est représenté sur la figure 5.

Dans le tableau ci-dessous, on peut voir un exemple de paramètres choisis pour la déconvolution du pic Ga2p.

|  | G-N | Ga-O | Ga-Ga |
|---|---|---|---|
| **FWHM (eV)** | < 1,5 | < 2,5 | < 2,5 |
| **% Gauss** | 80% | 100% | 100% |
| **Décalage (eV)** | Ref. | +0,7 | -1 |

Dans le cas où on exploite le pic Ga2p seul, on caractérise l'interface uniquement à partir des informations extraites de l'analyse de ce pic.

Le taux d'oxydation est calculé de la manière suivante :

$$taux\ d'oxydation = \frac{Aire\ pic\ GaO}{Aire\ pic\ GaO\ +\ Aire\ pic\ GaN\ +\ Aire\ pic\ Ga - Ga}$$

Sur la figure 6, on peut voir le taux d'oxydation en fonction de la position en énergie PE en eV (écart en énergie entre l'énergie Ga2p et l'énergie C1s) pour différentes épaisseurs d'Al$_2$O$_3$.

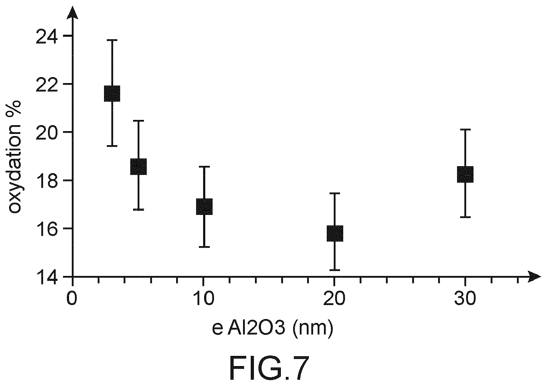

Il est également possible d'étudier l'effet de l'épaisseur de la couche d'Al$_2$O$_3$ sur le taux d'oxyde, plus généralement l'épaisseur de la couche de diélectrique sur le taux d'oxyde. Sur la figure 7, on peut voir représenté le taux d'oxyde en fonction de l'épaisseur e en nm de la couche d'Al$_2$O$_3$ de l'échantillon.

L'analyse avec la raie du Ga2p permet de comparer des éléments ayant une couche de GaN ayant subi au moins une étape de procédé de fabrication différente, et/ou avec des éléments comportant une couche de GaN recouverte d'une couche d'un matériau diélectrique différent.

Dans le cas où on exploite le pic Ga3d et le pic Ga2p, les différents points obtenus en étudiant le pic Ga2p sont comparés à ceux obtenus à partir du pic Ga3d, ce qui permet de compléter le résultat obtenu avec le pic Ga3d. Les résultats obtenus avec la raie Ga2p correspondant à une profondeur sondée différente de ceux obtenus avec la raie Ga3d. Généralement, l'acquisition avec une source X d'un spectre XPS avec la raie Ga3d est effectuée, puis l'acquisition avec une source X haute énergie d'un spectre XPS comprenant la raie Ga2p est effectuée.

En outre, puisque l'épaisseur sondée est plus importante avec un équipement muni d'une source X à haute énergie pour acquérir le spectre XPS comprenant la raie Ga2p, on peut envisager de caractériser des échantillons avec des couches d'oxyde plus épaisses, par exemple de l'ordre de 10 mm, qui sont plus proches des épaisseurs utilisées dans les transistors.

De manière avantageuse, la méthode de caractérisation peut également utiliser le pic N1s en étudiant sa composante oxydée et sa position en énergie, qui donnent également une indication sur le taux d'oxydation du GaN.

On peut alors comparer les différents points obtenus pour les pics N1s. Le résultat serait comparé à celui obtenu à partir du pic Ga3d, ce qui permettrait de confirmer, pour chaque échantillon, la tendance déduite des résultats obtenus avec le pic Ga3d.

Le signal du pic N1s peut être collecté avec la source à RX ayant permis de collecter le signal du pic Ga3d. De préférence, une deuxième source de rayons X avec une anode en Magnésium par exemple (raie Mg K$\alpha$ à 1254 eV) est utilisée pour collecter le signal du pic N1s, afin d'éviter la superposition avec des raies Auger du Ga (Ga LMM) qui rend plus difficile la décomposition de ce pic N1s.

De manière très avantageuse, il est aussi possible de corréler le taux d'oxydation et la position du pic Ga3d ou Ga2p aux mesures électriques de tension de seuil des transistors (VTH et VPO). Les inventeurs ont en effet observé que les variations de tension de seuil suivaient directement les tendances observées en XPS. En effet, plus il y a de défauts donneurs d'électrons (tels que l'oxygène) dans le canal, plus la tension de seuil du transistor va chuter.

Les mesures électriques de tension de seuil sont effectuées sur des transistors ayant vu le procédé de fabrication complet et fabriqués par exemple à partir de l'élément comprenant l'interface GaN/diélectrique ayant fait l'objet d'un spectre XPS, chaque procédé comportant l'étape d'élaboration (nettoyage, gravure ou autre) qui a été caractérisée par traitement du pic Ga3d ou Ga2p.

Il est a été décrit que les interfaces présentant les plus basses énergies et les taux d'oxydation les plus bas, sont les plus intéressantes, ceci dans le cas où l'on souhaite réaliser des composants électroniques offrant les meilleures performances électriques. On peut envisager d'autres applications pour lesquelles ce sont par exemple les interfaces présentant des énergies élevées et des taux d'oxydation bas, des énergies élevées et des taux d'oxydation élevés, ou des énergies basses et des taux d'oxydation élevés qui présentent le plus d'intérêt.

## Revendications

1. Méthode de caractérisation d'une interface GaN/diélectrique donnée comportant :

   - la réalisation d'un élément comportant une couche de GaN recouverte d'une couche d'un matériau diélectrique, la couche de GaN ayant subi au moins une étape de procédé de fabrication,
   - acquisition d'un spectre XPS de l'interface entre la couche de GaN et la couche de matériau diélectrique, ledit spectre comportant au moins la raie Ga2p,
   - traitement de ladite raie Ga2p pour calculer le taux d'oxydation du gallium et déterminer la position en énergie de la raie Ga2p,
   - comparaison du couple taux d'oxydation / position en énergie de la raie Ga2p, avec d'autres couples taux d'oxydation / position en énergie de la raie Ga2p pour d'autres éléments comportant une couche de GaN recouverte d'une couche d'un matériau diélectrique, la couche de GaN de chaque élément ayant subi au moins une étape de procédé de fabrication différente de celles des couches de GaN des autres éléments, et/ou pour d'autres éléments comportant une couche de GaN recouverte d'une couche d'un matériau diélectrique, le matériau diélectrique étant différent d'un élément à l'autre.

2. Méthode de caractérisation selon la revendication 1, dans laquelle

   - le spectre XPS de l'interface entre la couche de GaN et la couche de matériau diélectrique comporte également la raie Ga3d,
   - l'étape de traitement comporte le traitement de ladite raie Ga3d pour calculer le taux d'oxydation du gallium et déterminer la position en énergie de la raie Ga3d,
- l'étape de comparaison comportant la comparaison du couple taux d'oxydation / position en énergie de la raie Ga3d, avec d'autres couples taux d'oxydation / position en énergie de la raie Ga3d pour d'autres éléments comportant une couche de GaN recouverte d'une couche d'un matériau diélectrique, la couche de GaN de chaque élément ayant subi au moins une étape de procédé de fabrication différente de celles des couches de GaN des autres éléments, et/ou pour d'autres éléments comportant une couche de GaN recouverte d'une couche d'un matériau diélectrique, le matériau diélectrique étant différent d'un élément à l'autre.

3. Méthode de caractérisation selon la revendication 1 ou 2, dans laquelle ledit spectre comporte également la raie C1s et dans laquelle l'étape de traitement comporte :

- une étape de déconvolution de la raie Ga2p de sorte à la décomposer en une composante Ga2p relative à l'oxyde de gallium, une composante Ga2p relative relative au GaN, et une composante Ga2p relative à la présence de liaisons Ga-Ga,
- une étape de recalage de la position en énergie de la raie Ga2p en utilisant la raie C1s.

4. Méthode de caractérisation selon les revendications 2 et 3, dans laquelle l'étape de traitement comporte :

- une étape de déconvolution de la raie Ga3d de sorte à le décomposer en une composante Ga3d5/2, une composante Ga3d3/2 et une composante relative à l'oxyde de gallium,
- une étape de recalage de la position en énergie du pic Ga3d en utilisant la raie C1s.

5. Méthode de caractérisation selon la revendication 4, dans laquelle la position en énergie de la raie Ga3d est la position en énergie de la composante Ga3d5/2.

6. Méthode de caractérisation selon l'une des revendications 1 à 5, dans laquelle la comparaison comporte la disposition du point relatif à l'élément à caractériser et des points relatifs aux autres éléments sur un graphique comportant en abscisse la position en énergie et en ordonnée le taux d'oxydation.

7. Méthode de caractérisation selon la revendication 6, dans laquelle le graphique forme un abaque réalisé préalablement.

8. Méthode de caractérisation selon l'une des revendications 1 à 7, comportant :

- l'acquisition d'un spectre comportant au moins la raie N1s,
- le traitement de ladite raie N1s pour calculer le taux d'oxydation du GaN et déterminer la position en énergie de la raie N1s,
- comparaison du couple taux d'oxydation / position en énergie du couple N1s avec d'autres couples taux d'oxydation / position en énergie du couple N1s pour d'autres éléments comportant une couche de GaN recouverte d'une couche d'un matériau diélectrique, la couche de GaN de chaque élément ayant subi au moins une étape de fabrication différente de celles des couches de GaN des autres éléments, et/ou pour d'autres éléments comportant une couche de GaN recouverte d'une couche d'un matériau diélectrique, le matériau diélectrique étant différent d'un élément à l'autre.

9. Méthode de caractérisation d'un transistor à grille métal-isolant ou diélectrique-semi-conducteur, comportant une interface GaN/diélectrique donnée, comportant :

- la réalisation d'un élément comportant une couche de GaN recouverte d'une couche d'un matériau diélectrique, la couche de GaN ayant subi au moins une étape de procédé de fabrication, de sorte à présenter l'interface GaN/diélectrique donnée,
- acquisition d'un spectre XPS de l'interface donnée ledit spectre comportant au moins la raie Ga2p,
- traitement de la raie Ga2p pour calculer le taux d'oxydation du gallium et déterminer la position en énergie de la raie Ga2p,
- la mesure de la tension de seuil du transistor à grille métal-isolant ou diélectrique-semi-conducteur réalisé par la suite à partir du même élément présentant l'interface GaN/diélectrique donnée dans un motif de taille adapté, par exemple $1\mu m$; les étapes de réalisation comprenant notamment le dépôt du métal de grille,
- comparaison du triplet taux d'oxydation / position en énergie de la raie Ga2p /tension de seuil avec d'autres triplets taux d'oxydation /position en énergie de la raie Ga2p /tension de seuil d'autres transistors à grille intégrant une couche GaN recouverte d'une couche d'un matériau diélectrique, la couche de GaN du transistor à grille métal-isolant ou diélectrique-semi-conducteur, ayant subi une étape de procédé de fabrication différente de celles des couches de GaN des autres transistors à grille, et/ou pour une couche de GaN recouverte d'une couche d'un matériau diélectrique, le matériau diélectrique étant différent d'un transistor à l'autre.

**10.** Méthode de caractérisation d'un transistor selon la revendication 9, dans lequel :

- le spectre XPS de l'interface donnée ledit spectre comporte la raie Ga3d;
- l'étape de traitement comporte le traitement de ladite raie Ga3d pour calculer le taux d'oxydation du gallium et déterminer la position en énergie de la raie Ga3d,
- l'étape de comparaison comporte la comparaison du triplet taux d'oxydation / position en énergie de la raie Ga3d avec d'autres triplets taux d'oxydation /position en énergie de la raie Ga3d d'autres transistors à grille intégrant une couche GaN recouverte d'une couche d'un matériau diélectrique, la couche de GaN du transistor à grille métal-isolant ou diélectrique-semi-conducteur, ayant subi une étape de procédé de fabrication différente de celles des couches de GaN des autres transistors à grille, et/ou pour une couche de GaN recouverte d'une couche d'un matériau diélectrique, le matériau diélectrique étant différent d'un transistor à l'autre.

**11.** Méthode de sélection d'un procédé de fabrication d'une structure comportant une interface GaN/diélectrique destinée à une fonction donnée, comportant :

- la fabrication d'un ou plusieurs échantillons, lesdits échantillons ayant été fabriqués par des procédés de fabrication qui diffèrent les uns des autres par au moins une étape de fabrication,
- application de la méthode de caractérisation selon l'une des revendications 1 à 8,
- sélection de l'échantillon dont l'interface présente les propriétés les plus adaptées à la fonction donnée parmi les différents échantillons.

**12.** Méthode de sélection d'un matériau diélectrique pour une interface GaN/diélectrique destinée à une fonction donnée, comportant :

- la fabrication d'échantillons différant les uns des autres par le matériau diélectrique de l'interface GaN/diélectrique,
- application de la méthode de caractérisation selon l'une des revendications 1 à 8,
- sélection de l'échantillon dont l'interface présente les propriétés les plus adaptées à la fonction donnée parmi les différents échantillons.

**13.** Méthode de contrôle de la qualité de fabrication d'une structure comportant une interface GaN/diélectrique dans une ligne de production comportant :

- fabrication d'une structure sur la ligne de production ;
- application de la méthode de caractérisation selon l'une des revendications 1 à 8,
- détermination de la qualité de la fabrication.

**14.** Méthode de contrôle de la qualité de fabrication d'un transistor comportant une interface GaN/diélectrique dans une ligne de production comportant :

- fabrication d'une structure destinée à subir une mesure XPS et d'un transistor sur la ligne de production,
- application de la méthode de caractérisation selon la revendication 9 ou 10,
- détermination de la qualité de la fabrication.

FIG.1

FIG.2

FIG.3

FIG.4

FIG.5

FIG.6

FIG.7

Europäisches
Patentamt

European
Patent Office

Office européen
des brevets

# RAPPORT DE RECHERCHE EUROPEENNE

Numéro de la demande

EP 21 15 1681

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | DUAN T L ET AL: "Interfacial chemistry and valence band offset between GaN and AlOstudied by X-ray photoelectron spectroscopy", APPLIED PHYSICS LETTERS, A I P PUBLISHING LLC, US, vol. 102, no. 20, 21 mai 2013 (2013-05-21) , pages 201604-201604, XP012173065, ISSN: 0003-6951, DOI: 10.1063/1.4807736 [extrait le 2013-05-21] * abrégé; figures 1-2; tableau 1 * * pages 201604-1, colonne 1, dernier alinéa - pages 201604-2, colonne 2, dernier alinéa * ----- | 1-14 | INV. G01N23/2273 |
| Y | BRENNAN BARRY ET AL: "In situ atomic layer deposition half cycle study of AlOgrowth on AlGaN", APPLIED PHYSICS LETTERS, A I P PUBLISHING LLC, US, vol. 101, no. 21, 19 novembre 2012 (2012-11-19), pages 211604-211604, XP012168046, ISSN: 0003-6951, DOI: 10.1063/1.4767520 [extrait le 2012-11-21] * figures 1-2 * * page 1, colonne 1, alinéa 1 * * page 1, colonne 2, dernier alinéa * * page 2, colonne 1, alinéa 3 - page 3, colonne 2, alinéa 2 * ----- -/-- | 1-14 | DOMAINES TECHNIQUES RECHERCHES (IPC) G01N |

Le présent rapport a été établi pour toutes les revendications

| Lieu de la recherche | Date d'achèvement de la recherche | Examinateur |
|---|---|---|
| La Haye | 11 mai 2021 | Bockstahl, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 3

**Europäisches Patentamt**
**European Patent Office**
**Office européen des brevets**

**RAPPORT DE RECHERCHE EUROPEENNE**

Numéro de la demande

EP 21 15 1681

| DOCUMENTS CONSIDERES COMME PERTINENTS | | | | |
|---|---|---|---|---|
| Catégorie | Citation du document avec indication, en cas de besoin, des parties pertinentes | Revendication concernée | CLASSEMENT DE LA DEMANDE (IPC) | |
| Y | WANG HENGSHAN ET AL: "Hydroxyl Group Adsorption on GaN (0001) Surface: First Principles and XPS Studies", JOURNAL OF ELECTRONIC MATERIALS, WARRENDALE , PA, US, vol. 48, no. 4, 8 février 2019 (2019-02-08), pages 2430-2437, XP036719342, ISSN: 0361-5235, DOI: 10.1007/S11664-019-07011-1 [extrait le 2019-02-08] * figures 1-2 * * Introduction, pages 2430-2431 * * XPS analysis, pages 2431-2433 * ----- | 1-14 | | |
| A | GANG YE ET AL: "Influence of post-deposition annealing on interfacial properties between GaN and ZrO 2 grown by atomic layer deposition", APPLIED PHYSICS LETTERS, vol. 105, no. 15, 16 octobre 2014 (2014-10-16), page 152104, XP055734205, US ISSN: 0003-6951, DOI: 10.1063/1.4898577 * figures 1-3 * * pages 152104-2, colonne 1, alinéa 2 - pages 152104-3, colonne 1, dernier alinéa * ----- -/-- | 1-14 | DOMAINES TECHNIQUES RECHERCHES (IPC) | |

Le présent rapport a été établi pour toutes les revendications

| Lieu de la recherche | Date d'achèvement de la recherche | Examinateur |
|---|---|---|
| La Haye | 11 mai 2021 | Bockstahl, Frédéric |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 21 15 1681

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | YE GANG ET AL: "Effect of surface pretreatment on interfacial chemical bonding states of atomic layer deposited ZrO2on AlGaN", JOURNAL OF VACUUM SCIENCE AND TECHNOLOGY: PART A, AVS /AIP, MELVILLE, NY., US, vol. 33, no. 5, 22 juillet 2015 (2015-07-22), XP012199086, ISSN: 0734-2101, DOI: 10.1116/1.4927164 [extrait le 1901-01-01] * figures 4-6 * * III. Results and discussion; pages 05E117-2 - pages 05E117-4 * ----- | 1-14 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 11 mai 2021 | Bockstahl, Frédéric |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

.............................................................
& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KIM et al.** Band-bending of Ga-Polar GaN interfaced with Al203 through Ultraviolet/Ozone treatment. *ACS Applied Materials & Interfaces,* 2017, vol. 9, 17576

- **DUAN et al.** Effect of PDA on the Interface Electronic Structures of Al203-Capped GaN and GaN-Al-GaN-GaN Heterostructure. *ECS Journal of Solid State Science and Technology,* 2015, vol. 4 (9
- **CAZAUX.** *J. Electron Spectrosc. Relat. Phenom.,* 2000, vol. 113, 15